# EUROPEAN PATENT APPLICATION

(11) **EP 2 627 019 A1**
(43) Date of publication of application: **14.08.2013**
(21) Application number: 11830382.5
(22) Date of filing: 05.10.2011
(51) Int. Cl.: H04J 11/00, H04W 56/00

(54) **WIRELESS COMMUNICATION APPARATUS**

(30) Priority: 06.10.2010 JP 2010226335
(71) Applicant: Panasonic Corporation, Osaka 571-8501 (JP)
(72) Inventor: ANADA, Masayuki, Chuo-ku, Osaka 540-6207 (JP); USUI, Takeru, Chuo-ku, Osaka 540-6207 (JP)
(74) Representative: Grünecker, Kinkeldey, Stockmair & Schwanhäusser
(86) International application number: PCT/JP2011/005618
(87) International publication number: WO 2012/046448

(57) **Abstract**

Provided is a wireless communication method wherein the transmission timing control that follows the movements of mobile stations can be performed. A transmission timing control information generating unit (8h) of a base station calculates transmission timings, at which a plurality of mobile stations transmit signals, on the basis of the delay times of the respective mobile stations measured by a delay time measuring unit (8f) and on the basis of the movement speeds of the respective mobile stations detected by a movement speed detecting unit (8i). The transmission timing control information generating unit (8h) generates and reports, to the mobile stations, control information indicating the calculated transmission timings.

## Description

### Technical Field

The claimed invention relates to a radio communication apparatus that employs orthogonal frequency-division multiplexing (OFDM) modulation.

### Background Art

Long Term Evolution (LTE), which is a communication standard for mobile communications, is characterized by improved spectral efficiency and lower latency relative to related art communications standards, and is hoped to be a standard that will support the development of future mobile communication businesses.

Single-carrier frequency-division multiple access (SC-FDMA), where OFDM modulation is performed after first taking the discrete-time Fourier transform (DFT), is adopted as the uplink modulation scheme in LTE.

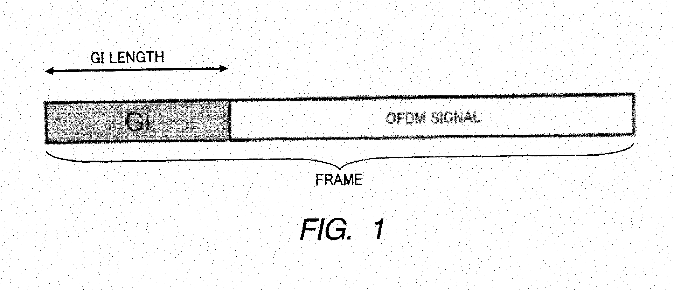

As shown in Fig.1, related art radio communication methods employ a frame format having a guard interval (GI), and perform signal transmission/reception involving OFDM modulation. As a mobile station transmits a radio signal that has undergone the above-mentioned OFDM modulation, the radio signal reaches a base station via a radio communication path. The radio signal received at the base station is a signal involving propagation delay and/or the like due to influences of the radio communication path. So long as the delay time is within the GI length, the base station is able to compensate for propagation delay because of periodicity, which is one characteristic of OFDM modulated signals. On the other hand, if the delay time exceeds the GI length inserted in the frame format, the base station cannot compensate for propagation delay. If propagation delay cannot be compensated for, communication quality drops (e.g., see PL 1).

A plurality of such mobile stations are distributed within the base station's coverage range (cell radius). Accordingly, there exists a radio communication path for each mobile station. Thus, as shown in Fig.2, the base station receives radio signals with distinct delay times D1, D2... from mobile stations UE#1, UE#2..., respectively. In this case, so long as the delay time difference (D1 - D2) between the mobile stations is within the GI length, propagation delays in the received signals can be compensated for as mentioned above. On the other hand, if the delay time difference between the mobile stations exceeds the GI length, the base station cannot compensate for propagation delay, which causes the signals received from the respective mobile stations to be non-orthogonal. Thus, the signal received from one mobile station becomes interference for the signal received from the other mobile station, which causes reception quality at the base station to drop.

One known method for reducing interference involves controlling the transmission timing of each mobile station. In this method, the base station detects the delay time of each mobile station, calculates a correction amount relative to a reference timing so as to eliminate delay time differences among the mobile stations, and generates and signals, per mobile station, control information for altering transmission timing. Each mobile station then alters the timing for radio signal transmission in accordance with the signaled control information.

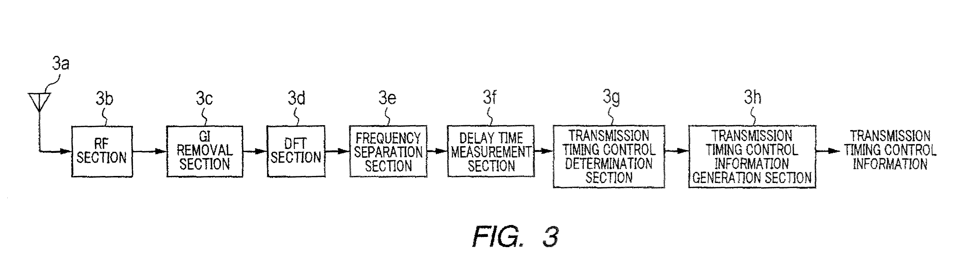

Fig.3 is a block diagram of a base station for generating transmission timing control information with respect to a radio communication method employing conventional OFDM modulation. RF section 3b converts a radio signal received at reception antenna section 3a into a baseband signal. GI removal section 3c removes the GIs inserted in the frame format. Discrete-time Fourier transform (DFT) section 3d and frequency separation section 3e extract each mobile station's signal multiplexed in the frequency domain. With respect to the extracted radio signal of each mobile station, delay time measurement section 3f measures the delay time relative to a reference timing. Transmission timing control determination section 3g determines whether the measured delay time exceeds a predetermined value, as well as whether a transmission timing control period has been completed. Based on the determination result by transmission timing control determination section 3g and on the measured delay time, transmission timing control information generation section 3h calculates the transmission timing, and generates transmission timing control information.

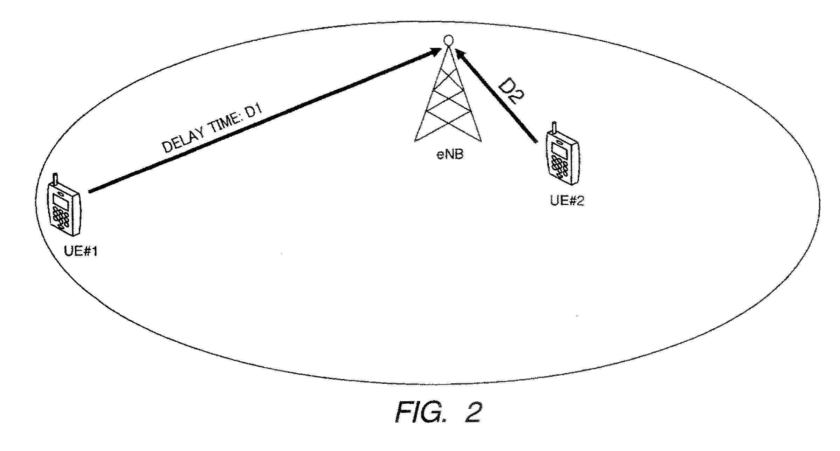

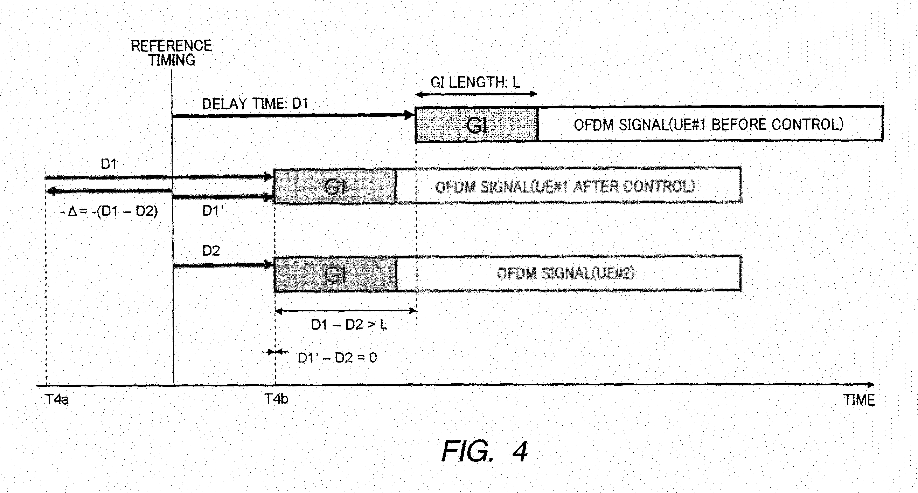

A control procedure will now be discussed using Fig.2 and Fig.4. By way of example, it is assumed that two mobile stations UE#1 and UE#2 are distributed within the cell radius of base station eNB as shown in Fig.2. It is further assumed that the delay times for the radio signals transmitted by the respective mobile stations to reach base station eNB are D1 and D2, respectively. It is further assumed that D1 > D2, and that delay time difference Δ between the mobile stations is greater than GI length L. In other words, Δ = D1 - D2 > L is satisfied. The relationship between the radio signals of the mobile stations with respect to the time domain in this case is shown in Fig.4. When delay time difference Δ between the mobile stations is greater than the GI length, as discussed above, because the delay time of the radio signal from mobile station U1 is greater than the GI length, base station eNB is unable to compensate for propagation delay. As such, base station eNB generates, with respect to mobile station UE#1 and as a transmission timing correction amount, -Δ as control information and signals it to mobile station UE#1. Mobile station UE#1 detects the control information, and, in accordance with the correction amount, changes the transmission timing to time T4a, which is the current time - Δ. In other words, mobile station UE#1 transmits a radio signal at a time that precedes reference timing by Δ. Through this operation, the delay time of the radio signal transmitted from mobile station UE#1 becomes D1' = D1 - A = D1 - (D1 - D2) = D2, and the delay time difference relative to mobile station UE#2 becomes D1' - D2 = D2 - D2 = 0. Thus, there is no longer any delay time difference, and it becomes possible to keep the delay time within the GI length (e.g., see NPL 1).

In addition, since the mobile station performs radio communications while moving, the time delay of the radio signal varies over time. By way of example, it is known through experience that when a mobile station is moving at 500 km/h, the propagation delay changes at a rate of 0.93 µsec/sec. In order to adapt to this change, the base station repeatedly generates the timing control information. In terms of how frequently the control information is to be generated, this may be achieved by generating the control information periodically or when the delay time exceeds a predetermined value, and so forth. By increasing the generation frequency, it is possible to accurately follow changes in delay time. On the other hand, as a result of generating and signaling the timing control information for each mobile station, an increase in the amount of processing or power consumption at the base station is caused and downlink transmission information increases, which could cause the data transmission rate to drop (e.g., see NPL 2).

### Citation List

### Patent Literature

PL 1: Japanese Patent Application Laid-Open No. 2000-295195

### Non-Patent Literature

NPL 1: 3GPP TS 36.213 v8.8.0 (2009-09)
NPL 2: 3GPP TS 36.321 v8.8.0 (2009-12)

### Summary of Invention

### Technical Problem

However, in related art radio communication methods, because timing control information that takes the moving speed of a mobile station into account is not generated, there arises a discrepancy between the state at the time at which transmission timing control information is generated and the time at which transmission timing is altered at the mobile station. Thus, there are cases where the transmission timing cannot be controlled as desired. There are problems with such cases in that the inability to perform compensation using the GI causes communication quality to drop, and in that repeatedly performing transmission timing control causes the amount of processing or power consumption at the base station to increase, as well as the downlink data transmission rate to drop.

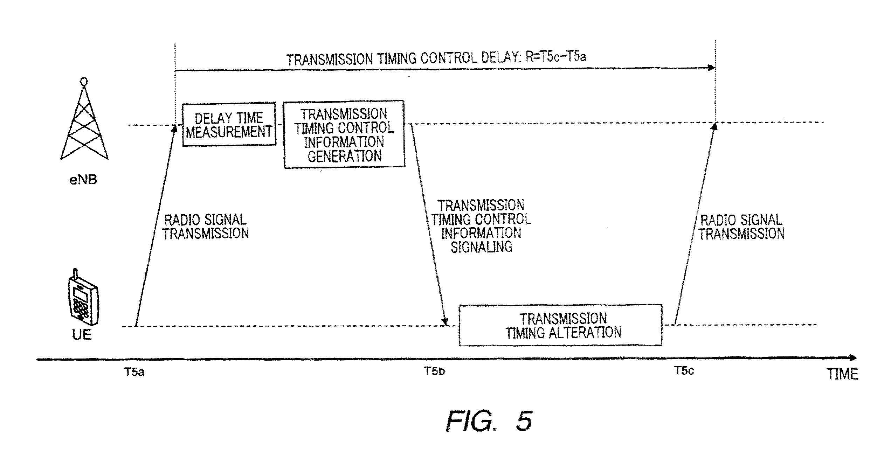

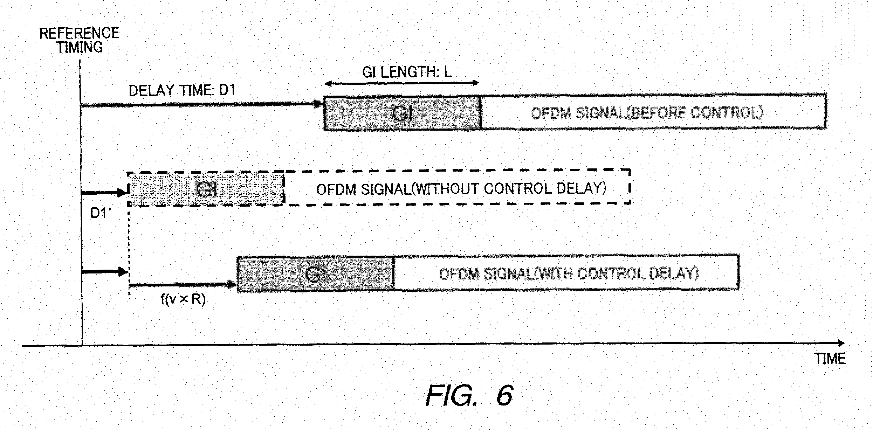

These problems are described in detail with reference to Figs.5 and 6.

It is assumed that mobile station UE is moving away from base station eNB at moving speed v. As mobile station UE transmits a radio signal to base station eNB at time T5a, base station eNB measures the delay time, and generates transmission timing control information based on the measured value. Base station eNB signals the transmission timing control information to mobile station UE at time T5b. Mobile station UE alters transmission timing in accordance with the transmission timing control information. Transmission timing control is completed as mobile station UE transmits at time T5c a radio signal whose transmission timing has been altered. Based on the above, delay R from when transmission timing control is started to when it is completed is given by R = T5c - T5a. In so doing, when mobile station UE is moving as shown in Fig.6, delay time f(v × R) related to control delay R and moving speed v is added. Thus, in some cases, the post-control state strays from the desired state where there is no control delay, and the transmission timing cannot be controlled as desired.

Further, there is a problem in that, as the mobile station moves towards the base station, the radio signal exceeds the GI length, causing communication quality to drop.

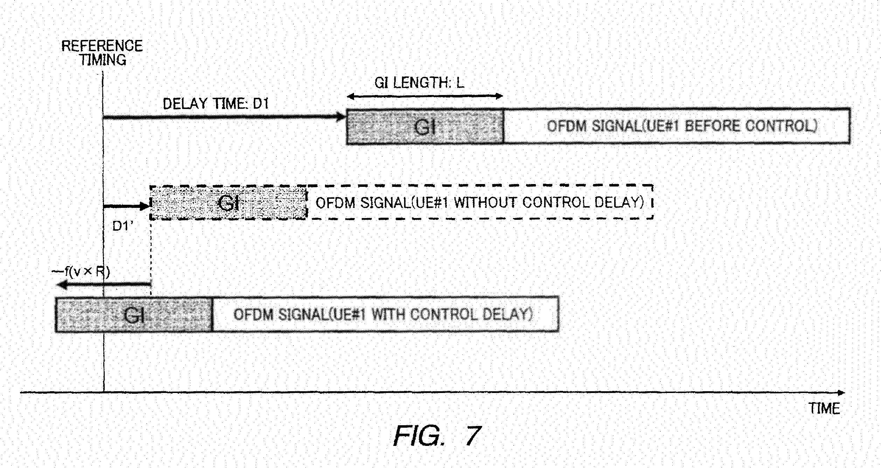

This problem is described in detail with reference to Figs.5 and 7.

It is assumed that mobile station UE#1 is moving towards base station eNB at moving speed v. If, in this case, the control delay shown in Fig.5 is in effect, there occurs a fluctuation of delay time -f(v × R) related to control delay R and moving speed v as discussed above. Thus, the delay time observed with respect to UE#1 becomes D1' - f(v × R) with respect to delay time D1' for when there is no control delay. Consequently, the beginning of a frame of a radio signal with a control delay may sometimes reach the base station earlier than a reference timing. The GI is an interval in which a control signal for delay time compensation is inserted, and, therefore, if the beginning of a frame precedes the reference timing, this would signify that the control signal would be dropped. As a result, base station eNB would be unable to carry out sufficient delay time compensation using the GI, and communication quality would drop.

Furthermore, in related art radio communication methods, timing control information is generated periodically, or when the delay time exceeds a predetermined value. Accordingly, in order to accommodate cases where the mobile station is moving at a high speed, it is necessary to raise the frequency with which timing control information is generated. Consequently, there are problems in that, due to the increase in transmission data amount for signaling the control information, the base station's processing amount and power consumption increase, and the downlink data transmission rate drops.

In order to solve problems with related art, an object of the claimed invention is to provide a radio communication apparatus that detects the moving speed and moving direction of each mobile station, and generates timing control information based on the detected quantities, thereby enabling timing control that is commensurate with the movement of a mobile station.

### Solution to Problem

A radio communication apparatus of the claimed invention comprises, with respect to a base station that generates transmission timing control information using an OFDM modulation scheme between a mobile station and the base station: a moving speed detection section that detects a moving speed of the mobile station; and a transmission timing control information generation section that generates the transmission timing control information by varying a transmission timing control amount in accordance with the moving speed detected at the moving speed detection section. This configuration enables a reduction in processing amount and power consumption while also adapting to the movement of the mobile station.

A radio communication apparatus of the claimed invention comprises, with respect to a base station that generates transmission timing control information using an OFDM modulation scheme between a mobile station and the base station: a moving speed detection section that detects a moving speed of the mobile station; a moving direction detection section that detects a moving direction of the mobile station; a transmission timing offset calculation section that calculates an offset to be added to the transmission timing control information based on the moving speed and the moving direction detected at the moving speed detection section and the moving direction detection section; and a transmission timing control information generation section that generates the transmission timing control information by adding the offset calculated at the transmission timing offset calculation section. This configuration makes it possible to reduce processing amount and power consumption, as well as to lessen communication quality degradation, while also adapting to the movement of the mobile station.

A radio communication apparatus of the claimed invention may further comprise a control history storage section that stores the transmission timing control information, wherein the frequency with which the transmission timing control information is generated is varied by the transmission timing control information generation section in accordance with control history in the control history storage section. This configuration makes it possible to reduce processing amount and power consumption, as well as to lessen the drop in transmission rate, while also adapting to the movement of the mobile station.

### Advantageous Effects of Invention

According to the claimed invention, by providing a detection section(s) that detect(s) the moving speed and moving direction of a mobile station, and varying the transmission timing control amount in accordance with the moving speed and moving direction of the mobile station, it is possible to reduce processing amount or power consumption while also adapting to the movement of the mobile station.

### Brief Description of Drawings

Fig.1 shows the frame format of a radio signal with respect to a related art radio communication method;
Fig.2 is a diagram showing the relationship between the positions of a base station and mobile stations and delay time with respect to a related art radio communication method;
Fig.3 is a block diagram of a base station with respect to a related art radio communication method;
Fig.4 is an operational diagram of transmission timing control for a base station with respect to a related art radio communication method;
Fig.5 is a diagram showing control procedures for transmission timing control at various times with respect to a related art radio communication method;
Fig.6 is an operational diagram for when there is a transmission timing control delay with respect to a related art radio communication method (where a mobile station is moving away from a base station);
Fig.7 is an operational diagram for when there is a transmission timing control delay with respect to a related art radio communication method (where a mobile station is moving towards a base station);
Fig.8 is a block diagram of a base station with respect to a radio communication method according to Embodiment 1 of the claimed invention;
Fig.9 is an operational diagram for a base station with respect to a radio communication method according to Embodiment 1 of the claimed invention;
Fig.10 is a weighting coefficient characteristic diagram with respect to a radio communication method according to Embodiment 1 of the claimed invention;
Fig.11 is a block diagram of a base station with respect to a radio communication method according to Embodiment 2 of the claimed invention;
Fig.12 is an operational diagram for a base station with respect to a radio communication method according to Embodiment 2 of the claimed invention;
Fig.13 is a diagram depicting a mobile station and its moving direction with respect to a radio communication method according to Embodiment 2 of the claimed invention;
Fig.14 is an offset amount characteristic diagram with respect to a radio communication method according to Embodiment 2 of the claimed invention;
Fig.15 is a block diagram of a base station with respect to a radio communication method according to Embodiment 3 of the claimed invention;
Fig.16 is an operational diagram for a base station with respect to a radio communication method according to Embodiment 3 of the claimed invention; and
Fig.17 is an operational flow diagram for a transmission timing control information storage section of a base station with respect to a radio communication method according to Embodiment 3 of the claimed invention.

### Description of Embodiments

Embodiments of the claimed invention are described below with reference to the drawings.

### (Embodiment 1)

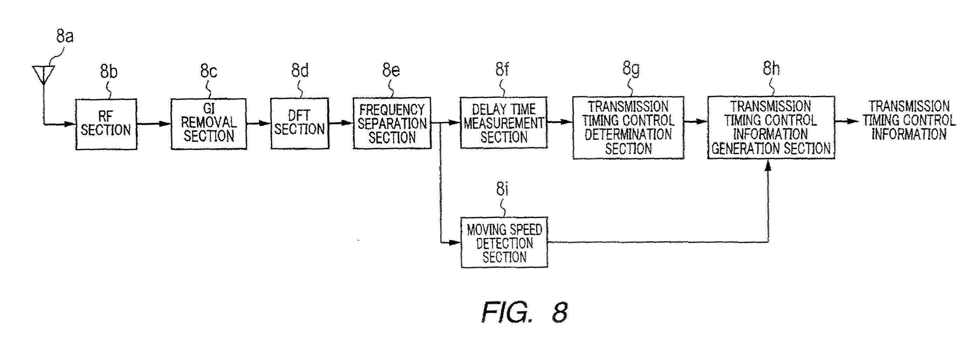

Fig.8 is a block diagram of a base station with respect to a radio communication method according to Embodiment 1 of the claimed invention. In Fig.8, RF section 8b converts a radio signal received at reception antenna section 8a into a baseband signal. GI removal section 8c removes the GIs that are inserted in the frame format. Discrete-time Fourier transform (DFT) section 8d and frequency separation section 8e extract signals of respective mobile stations multiplexed in the frequency domain. Delay time measurement section 8f measures the delay time of the extracted radio signal of each mobile station relative to a reference timing. Transmission timing control determination section 8g determines whether the measured delay time exceeds a predetermined value, and whether a transmission timing control period has been completed. Transmission timing control information generation section 8h generates transmission timing control information. Moving speed detection section 8i detects the moving speed of each mobile station based on the extracted signal of each mobile station. The moving speed detection method may also be one where the amount and/or frequency of phase fluctuation in the received signal is/are measured. Transmission timing control information generation section 8h calculates the transmission timing by performing weighting with, in addition to the delay time measured relative to the reference timing, the detected moving speed of each mobile station, and generates transmission timing control information.

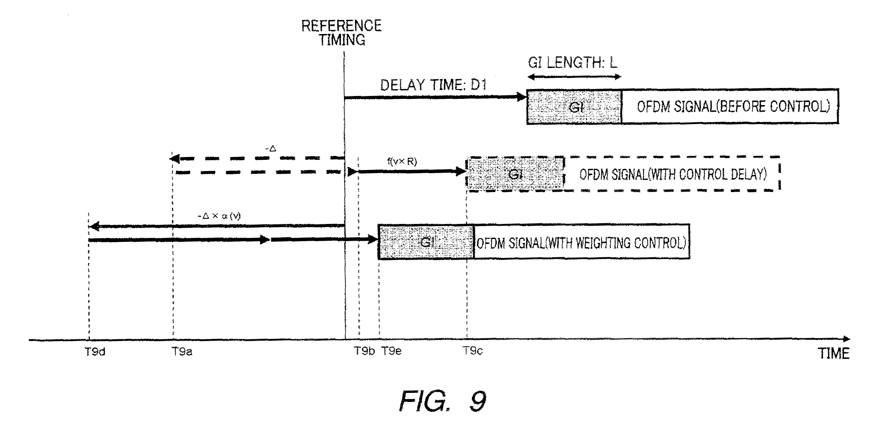

A radio communication method for a base station thus configured is described with reference to Fig.9.

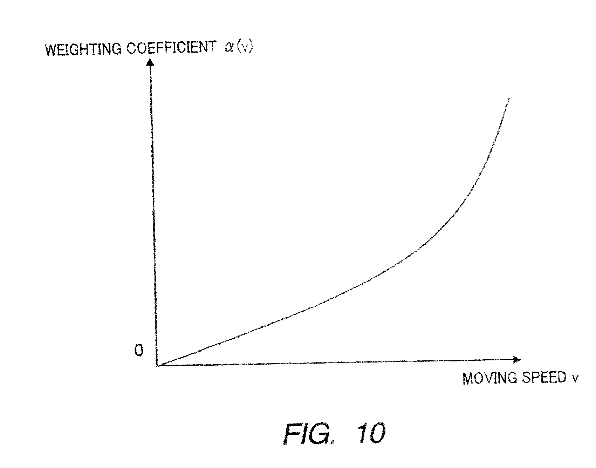

Fig.9 is an operational diagram for a base station with respect to a radio communication method according to the present embodiment, and is a diagram representing the temporal relationship of OFDM signals relative to the reference timing of the base station. It is assumed that the delay time measured by the base station with respect to a given mobile station is D1, and that the mobile station is moving away from the base station at moving speed v. Based on delay time D1 and moving speed v of the mobile station, the base station calculates transmission timing -Δ × α(v), generates transmission timing control information, and signals it to the mobile station. Δ is a transmission timing control amount calculated based on delay time D1, and α(v) is a function that takes moving speed v as an argument to give a weighting coefficient. This function, as shown in Fig.10 by way of example, is characteristic in that the weighting becomes greater as moving speed v increases. In accordance with the signaled timing control information, the mobile station alters the transmission timing to time T9d. The radio signal transmitted with the above-mentioned transmission timing reaches the base station at time T9e due to delay f(v × R) that is added in addition to delay time D1 and based on control delay R and moving speed v. If no transmission timing weighting using moving speed v is performed, that is, if timing control information given by -Δ is signaled, the time to which the transmission timing of the mobile station is altered would be T9a. By adding, in this case, delay time D1, the radio signal of the mobile station would reach the base station at time T9b, thus resulting in the desired control. However, if, as previously discussed, control delay f(v × R) were to be added in addition to delay time D1, the radio signal would reach the base station at time T9c, which strays from the desired state. By contrast, in the present embodiment, the base station calculates a transmission timing weighted based on moving speed v, and the mobile station controls the transmission timing for the radio signal in accordance with transmission timing control information. Arrival time T9e of the controlled radio signal has little time difference relative to time T9b, and is close to the reference timing. Furthermore, there is no need to generate transmission timing control information until the time difference between the radio signal of the mobile station and the reference timing of the base station exceeds a predetermined value. Thus, it is possible to keep the generation frequency for transmission timing control information under control.

Thus, according to a radio communication method of the present embodiment, by detecting the moving speed of a mobile station to perform timing control information weighting, it becomes possible to track the mobile station in accordance with the moving speed, thus enabling a reduction in the processing amount and/or power consumption involved in transmission timing control.

### (Embodiment 2)

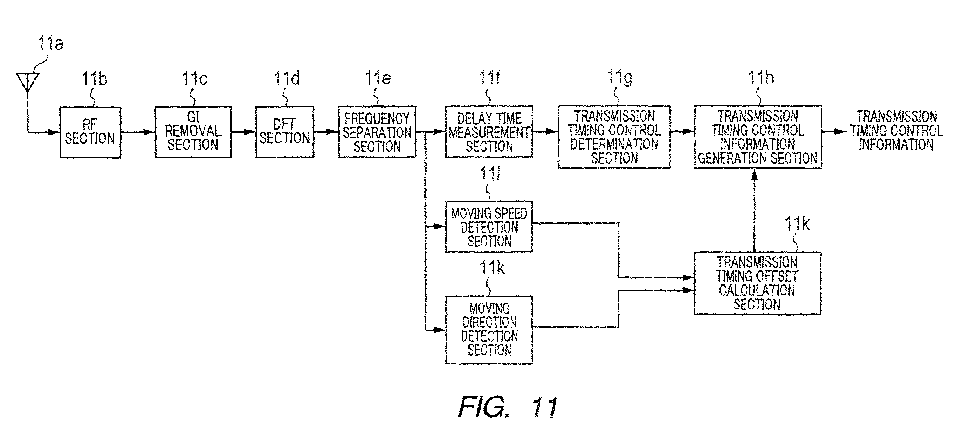

Fig.11 is a block diagram of a base station with respect to a radio communication method according to Embodiment 2 of the claimed invention.

In Fig.11, RF section 11b converts a radio signal received at reception antenna section 11a into a baseband signal. GI removal section 11c removes the GIs inserted in the frame format.

Discrete-time Fourier transform (DFT) section 11d and frequency separation section 11e extract signals of respective mobile stations multiplexed in the frequency domain. Delay time measurement section 11f measures the delay time of the extracted radio signal of each mobile station relative to a reference timing. Transmission timing control determination section 11g determines whether the measured delay time exceeds a predetermined value, and whether a transmission timing control period has been completed. Transmission timing control information generation section 11h generates transmission timing control information. Moving speed detection section 11i detects the moving speed of each mobile station based on the extracted signal of each mobile station. The moving speed detection method may also be one where the amount and/or frequency of phase fluctuation in the received signal is/are measured. Moving direction detection section 11j detects the moving direction of each mobile station based on the extracted signal of each mobile station. The moving direction detection method may also be one where power fluctuation in the received signal is measured, and/or where a positional change amount is measured using positional information obtained through a GPS and/or the like. Based on the detected moving speed and moving direction, transmission timing offset calculation section 11k calculates an offset amount to be added to transmission timing control information. By way of example, if it is detected that the moving direction is in the direction of the base station, transmission timing offset calculation section 11k performs calculations where a positive offset amount is weighted with the moving speed. Transmission timing control information generation section 11h generates transmission timing control information by adding the calculated offset amount in addition to the delay time measured relative to the reference timing.

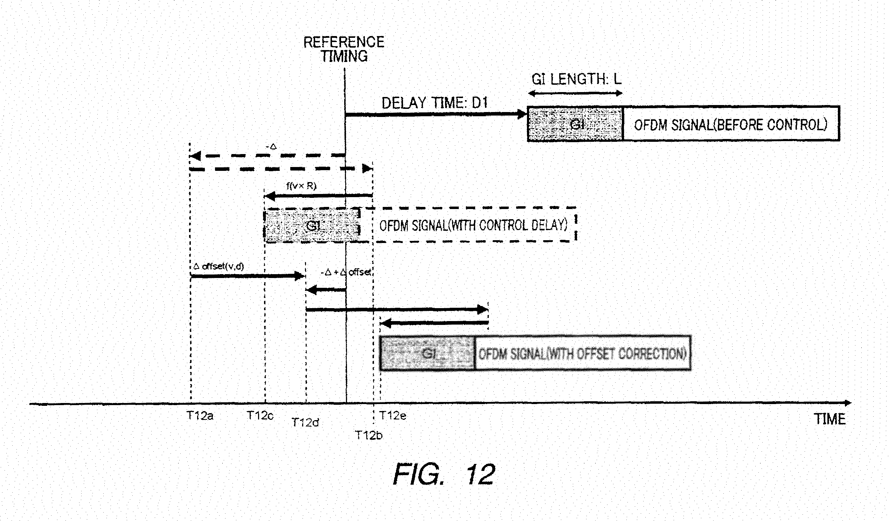

A radio communication method for a base station thus configured is described with reference to Fig.12.

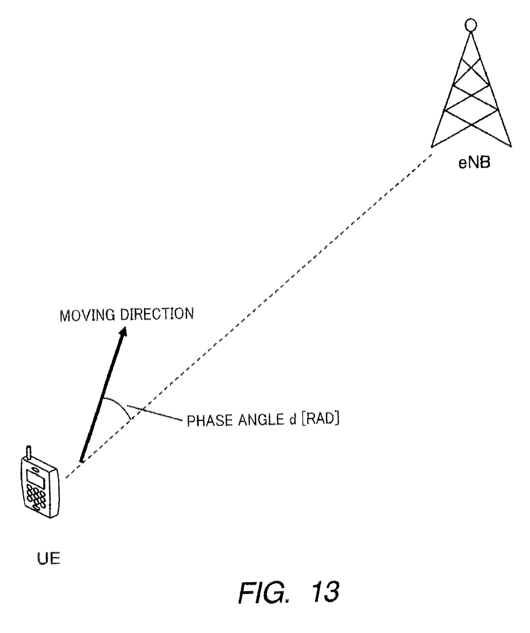

Fig.12 is an operational diagram for a base station with respect to a radio communication method according to the present embodiment, and is a diagram representing the temporal relationship of OFDM signals relative to the reference timing of the base station. It is assumed that the delay time measured by the base station with respect to a given mobile station is D1, and that the mobile station is moving towards the base station at moving speed v. Based on delay time D1, moving speed v, and moving direction d of the mobile station, the base station generates transmission timing -Δ + Δoffset(v, d), and signals transmission timing information to the mobile station. Δ is a transmission timing control amount calculated based on delay time D1, and Δoffset(v, d) is a function that takes moving speed v and moving direction d of the mobile station as arguments to give an offset amount for the transmission timing. Moving direction d represents the phase relationship [rad] between the base station and the mobile station as in Fig.13, for example. A phase angle of 0 may indicate that the mobile station is moving towards the base station in a linear fashion, and a phase angle of ±π may indicate that the mobile station is moving away in a linear fashion.

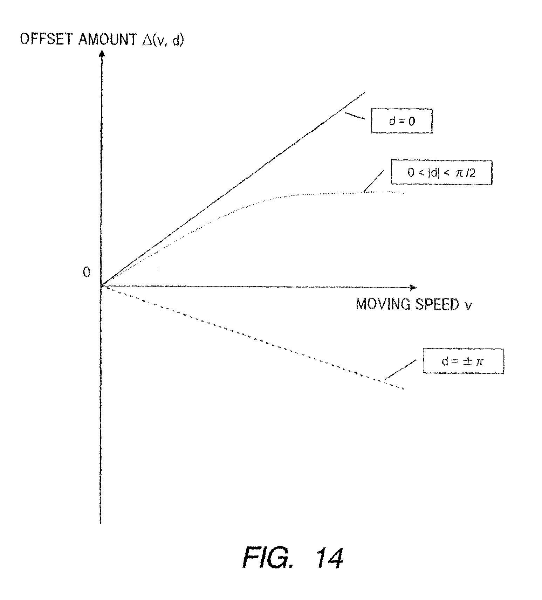

Function Δoffset(v, d) that gives an offset amount for the transmission timing may, as in Fig.14 for example, indicate a positive value when the mobile station is moving towards the base station, that is, when |d| < π/2, and may be so characterized that the offset amount increases as moving speed v increases. In accordance with the signaled timing control information, the mobile station alters the transmission timing to time T12d. The radio signal transmitted with the above-mentioned transmission timing reaches the base station at time T12e due to delay -f(v × R) that is added in addition to delay time D1 and based on control delay R and moving speed v.

If no offset is added to the timing control information, that is, if the timing control information is given by -Δ (see the frame with the broken lines in Fig.12), the time to which the transmission timing of the mobile station is altered would be T12a. By adding, in this case, delay time D1, the radio signal of the mobile station would reach the base station at time T12b, thus resulting in the desired control. However, if, as previously discussed, control delay f(v × R) were to be added in addition to delay time D1, the radio signal would reach the base station at time T12c, which precedes the reference timing. GI-based compensation cannot be performed for signals that arrive prior to the reference timing. Thus, the communication quality of the base station is degraded. By contrast, in the present embodiment, an offset calculated based on the moving speed and moving direction of the mobile station is added to the timing control information. Thus, it is possible to have the arrival time of the radio signal be later than the reference timing, which enables the base station to perform GI-based compensation.

Thus, according to a radio communication method of the present embodiment, by adding to timing control information an offset based on the moving speed and moving direction of a mobile station, it becomes possible to track the mobile station in accordance with the moving speed, thereby enabling a reduction in the processing amount and/or power consumption involved in transmission timing control. Furthermore, by preventing the problem of becoming unable to perform compensation using the GI when the mobile station is approaching the base station, it is possible to prevent a drop in communication quality.

### (Embodiment 3)

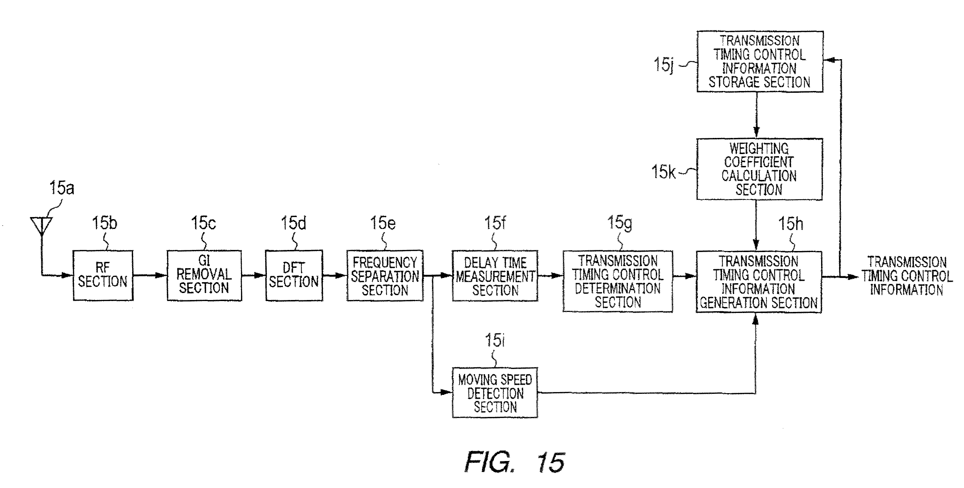

A block diagram of a base station with respect to a radio communication method according to Embodiment 3 of the claimed invention is shown in Fig.15.

In Fig.15, RF section 15b converts a radio signal received at reception antenna section 15a into a baseband signal. GI removal section 15c removes the GIs inserted in the frame format. Discrete-time Fourier transform (DFT) section 15d and frequency separation section 15e extract signals of respective mobile stations multiplexed in the frequency domain. Delay time measurement section 15f measures the time difference of the extracted radio signal of each mobile station relative to a reference timing. Transmission timing control determination section 15g determines whether the measured delay time exceeds a predetermined value, and whether a transmission timing control period has been completed. Transmission timing control information generation section 15h generates transmission timing control information. Moving speed detection section 15i detects the moving speed of each mobile station based on the extracted signal of each mobile station. The moving speed detection method may also be one where the amount and/or frequency of phase fluctuation in the received signal is/are measured.

Transmission timing control information storage section 15j stores the generated transmission timing control information, including past information. Weighting coefficient calculation section 15k generates a weighting coefficient for the transmission timing control information using the detected moving speed of each mobile station. Transmission timing control information generation section 15h weights the transmission timing in accordance with the weighting coefficient, and signals the transmission timing control information to the corresponding mobile station.

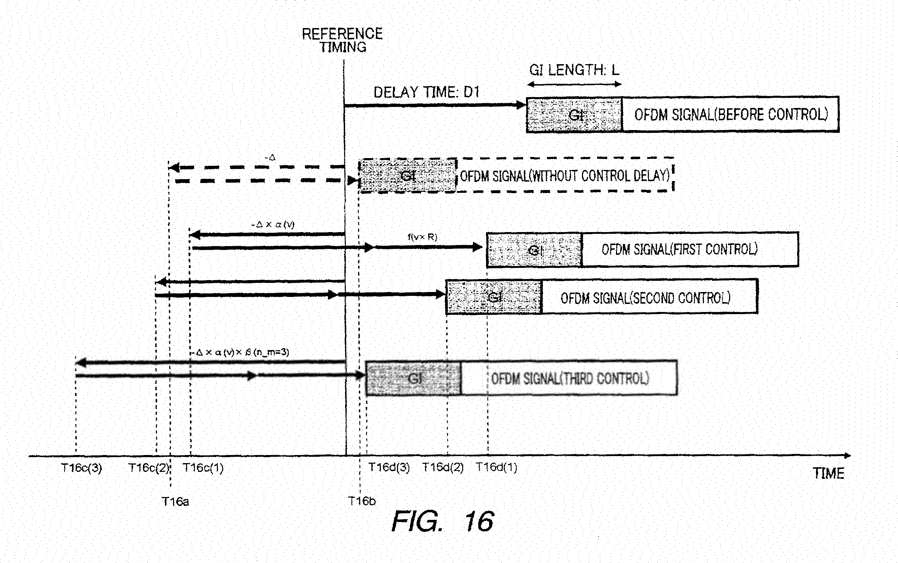

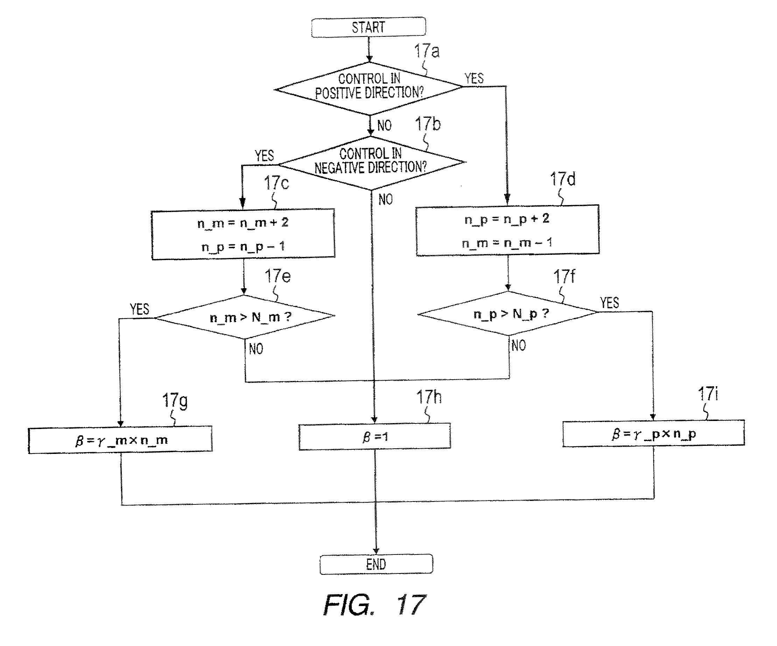

Operations of a radio communication method thus configured are described with reference to Figs.16 and 17.

Fig.16 is an operational diagram for a base station with respect to a radio communication method according to Embodiment 3 of the claimed invention, and is a diagram representing the temporal relationship of OFDM signals relative to the reference timing of the base station. It is assumed that the delay time measured by the base station with respect to a given mobile station is D1, and that the mobile station is moving away from the base station at moving speed v. Based on delay time D1 and moving speed v of the mobile station, the base station generates timing control information -Δ × α(v), and signals it to the mobile station. Δ is a transmission timing control amount calculated based on delay time D1, and α(v) is a function that takes moving speed v as an argument to give a weighting coefficient. This function, as shown in Fig.10 by way of example, is characteristic in that the weighting becomes greater as moving speed v increases.

In accordance with the signaled timing control information, the mobile station alters the transmission timing to time T16c(1). The radio signal transmitted with the above-mentioned transmission timing reaches the base station at time T16d(1) due to delay f(v × R) that is added in addition to delay time D1 and based on control delay R and moving speed v. Because time T16d(1) has a delay time including control delay f(v × R) relative to the reference timing, further control of the transmission timing is required. Failure to control the transmission timing to a desired state despite the fact that the transmission timing is thus controlled based on the moving speed is caused by such factors as moving speed detection errors caused by a drop in uplink communication quality, transmission timing control information signaling errors caused by a drop in downlink communication quality, and so forth. When such control is performed twice in a row, the arrival time of the radio signal of the mobile station is at T16d(2), and further transmission timing control is necessary, weighting coefficient calculation section 15k calculates weighting coefficient β through the procedure shown in Fig.17.

n_m and n_p in Fig.17 are cumulative variables that count control in the positive direction (process 17a) and control in the negative direction (process 17b). Every time transmission timing control is performed, one of them is incremented or decremented by process 17c or process 17d. Process 17e and process 17f determine whether the control count cumulative variables exceed their respective thresholds. N_m and N_p are thresholds for variables n_m and n_p, respectively. If the threshold determination result is negative, that is, if the cumulative value of the control count is equal to or less than the threshold, no weighting is carried out in process 17h, where β = 1. On the other hand, if one of n_m and n_p exceeds its threshold, weighting coefficient β is calculated in process 17g or process 17i. In so doing, the weighting coefficient is calculated based on n_m or n_p using γ_m and γ_p as coefficients. When the weighting of transmission timing control information is carried out using weighting coefficient β thus calculated, the transmission timing of the mobile station changes to time T16d(3), and the time at which the radio signal from the mobile station reaches the base station becomes T16d(3). Time 16d(3) is close to desired arrival time T16b, and transmission timing control is rendered unnecessary until a predetermined delay time is exceeded.

In the present embodiment, transmission timing control information is generated at transmission timing control information generation section 15h based on the moving speed detected at moving speed detection section 15i. However, as in Embodiment 2, the claimed invention may instead generate transmission timing control information, and/or the like, based on the moving speed and moving direction detected by moving speed detection section 11i and moving direction detection section 11j, which would provide similar advantageous effects.

Thus, with a radio communication method of the present embodiment, by performing transmission timing control information weighting that is based on transmission timing control history, it becomes possible to track a mobile station, and the processing amount and power consumption related to transmission timing control may be reduced.

The disclosure of the specification, drawings, and abstract included in Japanese Patent Application No. 2010-226335 filed on October 6, 2010, is hereby incorporated by reference in its entirety.

### Industrial Applicability

Thus, by providing a base station with a detection section(s) configured to detect the moving speed and moving direction of a mobile station, and varying a transmission timing control amount in accordance with the moving speed and moving direction of the mobile station, a radio communication method according to the claimed invention has an advantageous effect whereby processing amount and/or power consumption is/are reduced while adapting to the movement of the mobile station, and is effective as a radio communication method that employs OFDM modulation, for example.

### Reference Signs List

- GI: Guard interval
- L: Guard interval length
- eNB: Base station
- UE#1: Mobile station 1
- UE#2: Mobile station 2
- D1: Propagation delay time of mobile station 1
- D2: Propagation delay time of mobile station 2
- 3a: Reception antenna section
- 3b: RF section
- 3c: GI removal section
- 3d: DFT section
- 3e: Frequency separation section
- 3f: Delay time measurement section
- 3g: Transmission timing control determination section
- 3h: Transmission timing control information generation section
- 8a: Reception antenna section
- 8b: RF section
- 8c: G1 removal section
- 8d: DFT section
- 8e: Frequency separation section
- 8f: Delay time measurement section
- 8g: Transmission timing control determination section
- 8h: Transmission timing control information generation section
- 8i: Moving speed detection section
- 11a: Reception antenna section
- 11b: RF section
- 11c: GI removal section
- 11d: DFT section
- 11e: Frequency separation section
- 11f: Delay time measurement section
- 11g: Transmission timing control determination section
- 11h: Transmission timing control information generation section
- 11i: Moving speed detection section
- 11j: Moving direction detection section
- 11k: Transmission timing offset calculation section
- 15a: Reception antenna section
- 15b: RF section
- 15c: GI removal section
- 15d: DFT section
- 15e: Frequency separation section
- 15f: Delay time measurement section
- 15g: Transmission timing control determination section
- 15h: Transmission timing control information generation section
- 15i: Moving speed detection section
- 15j: Transmission timing control information storage section
- 15k: Weighting coefficient calculation section

## Claims

1. A radio communication apparatus for a base station that generates transmission timing control information using an OFDM modulation scheme between a mobile station and the base station, comprising:
a moving speed detection section that detects a moving speed of the mobile station; and
a transmission timing control information generation section that generates the transmission timing control information by varying a transmission timing control amount in accordance with the moving speed detected at the moving speed detection section.

2. A radio communication apparatus for a base station that generates transmission timing control information using an OFDM modulation scheme between a mobile station and the base station, comprising:
a moving speed detection section that detects a moving speed of the mobile station;
a moving direction detection section that detects a moving direction of the mobile station;
a transmission timing offset calculation section that calculates an offset to be added to the transmission timing control information based on the moving speed and the moving direction detected at the moving speed detection section and the moving direction detection section; and
a transmission timing control information generation section that generates the transmission timing control information by adding the offset calculated at the transmission timing offset calculation section.

3. The radio communication apparatus according to claim 2, wherein, when the mobile station is moving towards the base station, the transmission timing offset calculation section generates the transmission timing control information by adding an offset that results in a positive delay time difference between the base station and the mobile station.

4. The radio communication apparatus according to claim 2, further comprising a control history storage section that stores the transmission timing control information, wherein
the frequency with which the transmission timing control information is generated is varied by the transmission timing control information generation section in accordance with control history in the control history storage section.

5. (Amended) A radio communication apparatus for a base station that generates transmission timing control information using an OFDM modulation scheme between a mobile station and the base station, comprising:
a moving speed detection section that detects a moving speed of the mobile station;
a moving direction detection section that detects a moving direction of the mobile station;
a transmission timing offset calculation section that calculates an offset to be added to the transmission timing control information based on the moving speed and the moving direction detected at the moving speed detection section and the moving direction detection section; and
a transmission timing control information generation section that generates the transmission timing control information by adding the offset calculated at the transmission timing offset calculation section.

6. (Amended) The radio communication apparatus according to claim 1, wherein, when the mobile station is moving towards the base station, the transmission timing offset calculation section generates the transmission timing control information by adding an offset that results in a positive delay time difference between the base station and the mobile station.

7. (Amended) The radio communication apparatus according to claim 1, further comprising a control history storage section that stores the transmission timing control information, wherein
the frequency with which the transmission timing control information is generated is varied by the transmission timing control information generation section in accordance with control history in the control history storage section.

8. (Cancelled)
